# EUROPÄISCHE PATENTSCHRIFT

(11) **EP 3 208 572 B1**
(45) Veröffentlichungstag und Bekanntmachung des Hinweises auf die Patenterteilung: **13.06.2018**
(21) Anmeldenummer: 17155997.4
(22) Anmeldetag: 14.02.2017
(51) Int. Cl.: G01B 11/04, G01N 21/89

(54) **INSPEKTIONS- UND/ODER BAHNBEOBACHTUNGSVORRICHTUNG, VERWENDUNG EINER ANORDNUNG ALS HINTERGRUNDBLENDE ODER DURCHLICHTSENDER IN DER INSPEKTIONS- UND/ODER DER BAHNBEOBACHTUNGSVORRICHTUNG UND VERFAHREN ZUM BETREIBEN DER INSPEKTIONS- UND/ODER BAHNBEOBACHTUNGSVORRICHTUNG**
INSPECTION AND/OR SHEET OBSERVATION DEVICE, USE OF AN ASSEMBLY AS BACKGROUND SCREEN OR TRANSMITTED LIGHT TRANSMITTER IN THE INSPECTION AND/OR SHEET OBSERVATION DEVICE AND METHOD FOR OPERATING THE INSPECTION AND/OR SHEET OBSERVATION DEVICE
DISPOSITIF DE SURVEILLANCE ET/OU D'INSPECTION DE BANDE, UTILISATION D'UN SYSTÈME EN TANT QUE DIAPHRAGME D'ARRIÈRE-PLAN OU D'ÉMETTEUR DE LUMIÈRE TRANSMISE DANS LE DISPOSITIF DE SURVEILLANCE ET/OU D'INSPECTION DE BANDE ET PROCÉDÉ DE FONCTIONNEMENT DU DISPOSITIF DE SURVEILLANCE ET/OU D'INSPECTION DE BANDE

(30) Priorität: 22.02.2016 DE 102016103070
(43) Veröffentlichungstag der Anmeldung: 23.08.2017
(73) Patentinhaber: Texmag GmbH Vertriebsgesellschaft, 8800 Thalwil (CH)
(72) Erfinder: ZWERGER, Lars, 86163 Augsburg (DE)
(74) Vertreter: PATERIS Patentanwälte PartmbB

(56) Entgegenhaltungen:
- EP-A1- 1 940 141
- Imaging Stemmer: "Flat Lights - LFL Series", , 30. Juni 2013 (2013-06-30), XP055366382, Gefunden im Internet: URL:https://www.stemmer-imaging.co.uk/medi a/uploads/websites/documents/products/illu mination/CCS/en-CCS-LFL-Flat-Lights-BCCS8- 201306.pdf [gefunden am 2017-04-21]
- Edmund Optics: "Mattglas", , 21. April 2017 (2017-04-21), XP055366481, Gefunden im Internet: URL:https://www.edmundoptics.de/optics/win dows-diffusers/optical-diffusers/ground-gl ass-diffusers/#resources [gefunden am 2017-04-21]

## Beschreibung

Die Erfindung betrifft eine Inspektionsvorrichtung und/oder Bahnbeobachtungsvorrichtung, eine Verwendung einer Anordnung als Hintergrundblende oder Durchlichtsender in der Inspektionsvorrichtung und/oder Bahnbeobachtungsvorrichtung und ein Verfahren zum Betreiben der Inspektionsvorrichtung und/oder Bahnbeobachtungsvorrichtung.

Herkömmlich kann in einer Anlage zum Herstellen, Bearbeiten oder Veredeln einer Materialbahn, wie beispielsweise eine Papierbahn, eine Folienbahn oder eine Textilbahn, die Herstellung, Bearbeitung oder Veredelung der Materialbahn mittels einer Kamera überwacht werden. Dazu kann zur Erhöhung der Bildqualität der von der Kamera aufgenommenen Bilder die Materialbahn von der gleichen Seite der Materialbahn, an der auch die Kamera angeordnet ist, mit einem Auflicht beleuchtet werden. Zur Schaffung eines verbesserten Hintergrunds und damit zu Erhöhung der Bildqualität kann auf der der Kamera gegenüber liegenden Seite der Materialbahn eine angebrachte Hintergrundblende vorgesehen sein. Der Begriff der Hintergrundblende ist im Sinne eines Sichtschutzes zu verstehen und nicht im optischen Sinne, d.h. im Sinne einer Platte mit einem Loch.

Bei einer zum Beispiel teilweise gemischten undurchlässigen und/oder opaken, transluzenten, transparenten Materialbahn kann von den undurchlässigen und/oder opaken, transluszenten Bereichen der Materialbahn von dem Auflicht ein Schatten erzeugt werden, der auf der Hintergrundblende sichtbar ist. Dieser sichtbare Schatten, der dann auch von der Kamera aufgenommen wird, vermindert die Bildqualität. Andererseits weist dann die Hintergrundblende auch Bereiche auf, die wesentlich heller als die schattigen Bereiche sind. Diese wesentlich helleren Bereiche können als eine Überleuchtung auf den Bildern erscheinen, die ebenfalls die Bildqualität vermindert.

Der Schatten und die Überbeleuchtung können vermindert werden, indem die Hintergrundblende in einem großen Abstand von der Materialbahn angeordnet wird. Dies ist jedoch nur möglich, wenn in der Anlage zum Herstellen, Bearbeiten oder Veredeln der Materialbahn genügend Platz dafür vorhanden ist. Weiterhin kann es zusätzlich nachteilig sein, dass dann bei einem großen Abstand die Lichtquelle oder die Lichtquellen des Auflichts in den Bildern sichtbar werden können. Dies vermindert ebenfalls die Bildqualität der von der Kamera aufgenommenen Bilder.

EP 1 940 141 A1 offenbart Vorrichtungen zum Erfassen eines Bildes in einer Bildebene, welche ein erstes Sensormittel und ein erstes Abbildungsmittels sowie ein zweites Sensormittel und eines zweites Abbildungsmittel umfassen.

Aufgabe der Erfindung ist es daher eine Inspektionsvorrichtung und/oder eine Bahnbeobachtungsvorrichtung für eine Materialbahn, eine Verwendung einer Anordnung als Hintergrundblende und ein Verfahren zum Betreiben der Inspektionsvorrichtung und/oder der Bahnbeobachtungsvorrichtung zu schaffen, bei denen Bilder der Materialbahn mit einer hohen Bildqualität aufnehmbar sind.

Die erfindungsgemäße Inspektionsvorrichtung und/oder Bahnbeobachtungsvorrichtung zur Inspektion bzw. Beobachtung von auf einer durch eine Führungsvorrichtung geführten Materialbahn, die eine Vorderseite und eine der Vorderseite abgewandt angeordnete Rückseite aufweist, weist eine Kamera, die ein Sichtfeld aufweist und eingerichtet ist ein Bild der im Sichtfeld liegenden Vorderseite aufzunehmen, einem Auflichtsender, der eingerichtet ist die Vorderseite in einem Bereich des Sichtfeldes mit einem Auflicht zu beleuchten, und eine Hintergrundblende auf, die auf der der Kamera gegenüberliegenden Seite der Materialbahn und im Sichtfeld der Kamera angeordnet ist, wobei die Hintergrundblende eine Diffusorplatte, die eine Absorption für das Auflicht von 5 bis 50 % hat, eine Lichtleiterplatte und eine Reflektionsfläche aufweist, die in dieser Reihenfolge ausgehend von der Materialbahn angeordnet sind, und die Hintergrundblende eine Lichtquelle aufweist, die eingerichtet ist Licht in ein Ende der Lichtleiterplatte einzukoppeln, wobei die Lichtleiterplatte eingerichtet ist das Licht auszukoppeln, so dass die Rückseite der Materialbahn in einem Bereich des Sichtfeldes auch mit einem Durchlicht beleuchtbar ist.

Erfindungsgemäß ist die Verwendung einer Anordnung mit einer Diffusorplatte, einer Lichtleiterplatte, einer Lichtquelle und einer Reflektionsfläche als eine Hintergrundblende oder als einen aktiven Durchlichtsender in der Inspektionsvorrichtung und/oder der Bahnbeobachtungsvorrichtung, wobei die Diffusorplatte eine Absorption für das Auflicht von 5 bis 50 %, insbesondere von 10 bis 30 %, hat.

Bei dem erfindungsgemäßen Verfahren zum Betreiben der Inspektionsvorrichtung und/oder der Bahnbeobachtungsvorrichtung wird mit der Kamera ein Bild aufgenommen.

Die Hintergrundblende kann daher passiv und aktiv betrieben werden. Der passive Betrieb zeichnet sich dadurch aus, dass die Lichtquelle ausgeschaltet ist, so dass die Rückseite der Materialbahn nicht mit dem Durchlicht beleuchtet wird. Der aktive Betrieb zeichnet sich dadurch aus, dass die Lichtquelle eingeschaltet ist und die Hintergrundblende dann als Durchlichtsender fungiert, so dass die Rückseite der Materialbahn mit dem Durchlicht beleuchtet wird. Prinzipiell wird sowohl im aktiven als auch im passiven Betrieb der Hintergrundblende die Materialbahn mit dem Auflicht beleuchtet, jedoch können alle denkbaren Beleuchtungskombinationen zum Einsatz kommen. Das Auflicht kann geblitzt oder eine Dauerbeleuchtung sein. Durch die Hintergrundblende steht einem Betreiber der Inspektionsvorrichtung und/oder Bahnbeobachtungsvorrichtung ein Werkzeug zu Verfügung, mit dem durch ein Ausprobieren des aktiven oder passiven Betriebs versucht werden kann, die Bildqualität der von der Inspektionsvorrichtung und/oder Bahnbeobachtungsvorrichtung aufgenommen Bilder zu erhöhen.

Sowohl in dem passiven als auch in dem aktiven Betrieb können sich durch die erfindungsgemäß ausgestaltete Hintergrundblende nur ein sehr schwacher Schatten und nur eine sehr schwache Überbeleuchtung ausbilden oder es kann sogar die Bildung des Schattens und/oder der Überbeleuchtung vollständig vermieden werden, so dass Bilder mit einer hohen Bildqualität, insbesondere mit einem hohen Kontrast, aufnehmbar sind. Durch die Absorption von mindestens 5 % für das Auflicht können Reflektionen des Auflichts an der Hintergrundblende und damit die Überbeleuchtung besonders effektiv vermieden werden. Dabei wird bewusst in Kauf genommen, dass durch die relativ hohe Mindestabsorption auch ein relativ hoher Anteil des Durchlichts in der Diffusorplatte absorbiert wird und somit nicht zum Beleuchten der Materialbahn zur Verfügung steht. Auch wird bewusst in Kauf genommen, dass durch die relativ hohe Mindestabsorption sich die Diffusorplatte durch die Absorption des Durchlichts und/oder des Auflichts im Betrieb der Inspektionsvorrichtung und/oder Bahnbeobachtungsvorrichtung aufwärmt.

Der schwache Schatten und die schwache Überbeleuchtung werden selbst dann gebildet, wenn die Hintergrundblende nahe der Materialbahn angeordnet ist. Somit haben die Inspektionsvorrichtung und/oder die Bahnbeobachtungsvorrichtung nur einen geringen Platzbedarf. Zudem ist der das Auflicht erzeugende Auflichtsender, insbesondere die mindestens eine Lichtquelle des Auflichtsenders, nicht in den aufgenommenen Bildern sichtbar. Dies wird zum einen durch die erfindungsgemäße Ausgestaltung der Hintergrundblende bewirkt, zum anderen kann dieser Effekt noch weiter gesteigert werden, indem die Hintergrundblende nahe an der Materialbahn angeordnet wird.

Der aktive Betrieb kann bei verschiedenen Materialbahnen von Vorteil sein. Beispielsweise kann durch den aktiven Betrieb der Kontrast der Bilder und damit deren Bildqualität erhöht werden. Denkbar ist beispielsweise auch eine Anwendung, bei der die Vorderseite und die Rückseite der Materialbahn miteinander verglichen werden, wie beispielsweise bei der Herstellung, Bearbeitung oder Veredelung von Geldscheinen. Beispielsweise kann eine Prüfung des Vorderseitenregisters und des Rückseitenregisters der Materialbahn erfolgen. Anhand dieser Prüfung kann beispielsweise eine exakte Aufeinanderpassung der Druckseiten der Vorderseite und der Rückseite der Materialbahn erfolgen. Dabei kann gegebenenfalls durch den aktiven Betrieb der Kontrast der Rückseite erhöht werden oder die Rückseite kann durch den aktiven Betrieb überhaupt erst in den von der Kamera aufgenommenen Bildern sichtbar gemacht werden.

Durch die Lichtleiterplatte und deren Anordnung in der Hintergrundblende ist eine besonders homogene Ausleuchtung der Materialbahn mit dem Durchlicht erreichbar. Die Lichtleiterplatte kann beispielsweise Glas oder Polycarbonat aufweisen. An der Lichtleiterplatte, insbesondere an dessen Oberfläche, können weiße Punkte vorgesehen sein, um das Licht auszukoppeln. Auch können Partikel in der Lichtleiterplatte vorgesehen sein, um das Licht auszukoppeln. Dabei kann die Größe der Partikel variieren, um die von der Lichtquelle ausgehende Lichtabschwächung zu kompensieren, so dass das austretende Licht eine weitestgehende homogene Intensität hat. Auch kann die Lichtleiterplatte eine strukturierte Oberfläche haben, um das Licht auszukoppeln. Die Lichtauskopplung findet hierbei in Richtung zu der Diffusorplatte und/oder zu der Reflektionsfläche statt.

Bei der Diffusorplatte kann es sich beispielsweise um eine Milchglasscheibe, um eine Acrylglasscheibe und/oder um Plexiglas in Milchglasoptik, insbesondere PMMA, handeln.

Die Reflektionsfläche kann diffus reflektierend sein. Dabei kann es sich bei der diffus reflektierenden Reflektionsfläche beispielsweise um ein weiß lackiertes Blech oder um eine Diffusorfolie handeln. Mit der diffus reflektierenden Reflektionsfläche kann eine besonders homogene Beleuchtung der Rückseite mit dem Durchlicht erfolgen.

Es ist bevorzugt, dass eine Mehrzahl der Lichtquellen vorgesehen ist, die entlang des Endes der Lichtleiterplatte angeordnet sind und einzeln einschaltbar sind, so dass die Rückseite der Materialbahn bereichsweise mit dem Durchlicht beleuchtbar ist. Damit können einzelne Bereiche der Materialbahn selektiv beleuchtet werden ohne dass es erforderlich ist, die gesamte Materialbahn zu beleuchten, wodurch beispielsweise der Energieverbrauch der Inspektionsvorrichtung und/oder Bahnbeobachtungsvorrichtung vorteilhaft gering ist. Hierbei ist die Hintergrundblende dann derart ausgebildet, dass die gesamte Materialbahn in dessen Querrichtung beleuchtbar ist.

Alternativ ist bevorzugt, dass die Hintergrundblende verschiebbar in Querrichtung der Materialbahn angeordnet ist. Damit lassen sich einzelne Bereiche der Materialbahn ebenfalls selektiv beleuchten und gleichzeitig kann dadurch die Breite der Hintergrundblende kürzer als die Breite der Materialbahn gewählt werden, wodurch die Hintergrundblende vorteilhaft klein und mit geringem Materialverbrauch ausgeführt werden kann. Bei der verschiebbaren Hintergrundblende kann ebenfalls eine Lichtquelle oder eine Mehrzahl an Lichtquellen vorgesehen sein.

Die Lichtquellen der Hintergrundblende sind bevorzugt eingerichtet im ultravioletten und/oder im sichtbaren und/oder im infraroten Wellenlängenbereich zu emittieren, wobei im sichtbaren Bereich insbesondere eine RGB-Belichtung vorgesehen ist.

Die Lichtquellen der Hintergrundblende sind bevorzugt eingerichtet Dauerlicht und/oder geblitztes Licht zu emittieren.

Die Inspektionsvorrichtung und/oder Bahnbeobachtungsvorrichtung ist bevorzugt eingerichtet, die Intensität der Lichtquellen der Hintergrundblende zu variieren. Damit kann die Intensität des Durchlichts an die optischen Eigenschaften der Materialbahn angepasst werden.

Es ist bevorzugt, dass die Diffusorplatte, die Lichtleiterplatte und die Reflektionsfläche beabstandet und im Wesentlichen parallel zueinander angeordnet sind. Durch die beabstandete Anordnung kann das Durchlicht mit einer hohen Effizienz aus der Lichtleiterplatte ausgekoppelt werden. Durch die parallele Anordnung kann die Bildung der Schatten und die Überbelichtung besonders gut unterdrückt werden.

Es ist bevorzugt, dass die Lichtleiterplatte transparent für senkrecht auf die Lichtleiterplatte einfallendes Licht ist. Hierdurch wird Licht, welches auf die Reflektionsfläche trifft und von dieser reflektiert wird, via die Lichtleiterplatte auf die Materialbahn zurückgeleitet. Dadurch nimmt vorteilhaft die Effizienz der Beleuchtung der Rückseite mit dem Durchlicht zu.

Die Diffusorplatte hat bevorzugt eine Absorption für das Auflicht von 10 bis 30 %. Durch die genannten Maßnahmen wird die Bildung der Schatten und der Überbeleuchtung besonders gut unterdrückt.

Die Diffusorplatte ist bevorzugt im Wesentlichen parallel zu der Materialbahn angeordnet. Durch die genannten Maßnahmen wird die Bildung der Schatten und die Überbeleuchtung besonders gut unterdrückt.

Es ist bevorzugt, dass bei der Verwendung der Anordnung mit der Diffusorplatte, der Lichtleiterplatte, der Lichtquelle und der Reflektionsfläche die Vorderseite mit dem Auflicht und die Rückseite mit dem Durchlicht beleuchtet wird oder die Vorderseite mit dem Auflicht und die Rückseite nicht mit dem Durchlicht beleuchtet wird oder die Vorderseite nicht mit dem Auflicht und die Rückseite mit dem Durchlicht beleuchtet wird oder bei Vorderseite nicht mit dem Auflicht und die Rückseite nicht mit dem Durchlicht beleuchtet wird. Besonders bevorzugt wird die Vorderseite mit dem Auflicht beleuchtet und optional die Rückseite mit dem Durchlicht beleuchtet.

Die Materialbahn ist bevorzugt zumindest bereichsweise transparent und/oder zumindest bereichsweise transluszent für das Auflicht und/oder das Durchlicht.

Es ist bevorzugt, dass die Materialbahn bereichsweise undurchlässig und/oder opak für das Auflicht und/oder Durchlicht ist.

Es ist bevorzugt, dass die Vorderseite der Materialbahn mit Auflicht beleuchtet wird. Bei Materialbahnen, die sowohl transparent und/oder transluszent als auch undurchlässig und/oder opak sind, treten die Probleme der Bildung der Schatten und der Überbeleuchtung besonders stark auf, wodurch bei solchen Materialbahnen die Verwendung der Anordnung besonders vorteilhaft ist.

Es ist bevorzugt, dass bei dem Verfahren zum Betreiben der Inspektionsvorrichtung und/oder Bahnbeobachtungsvorrichtung die Vorderseite mit dem Auflicht und die Rückseite mit dem Durchlicht beleuchtet wird oder die Vorderseite mit dem Auflicht und die Rückseite nicht mit dem Durchlicht beleuchtet wird oder die Vorderseite nicht mit dem Auflicht und die Rückseite mit dem Durchlicht beleuchtet wird oder bei Vorderseite nicht mit dem Auflicht und die Rückseite nicht mit dem Durchlicht beleuchtet wird.

Es ist bevorzugt, dass bei dem Verfahren zum Betreiben der Inspektionsvorrichtung und/oder Bahnbeobachtungsvorrichtung die Rückseite der Materialbahn mit Durchlicht beleuchtet wird. Dadurch kann die Bildqualität weiter erhöht werden, beispielsweise kann eine verbesserte Farbwiedergabe erfolgen, der Farbstich kann vermindert werden und/oder der Kontrast kann erhöht werden.

Die Rückseite wird bevorzugt zeitgleich mit der Vorderseite der Materialbahn beleuchtet. Dadurch kann die Bildqualität weiter erhöht werden, beispielsweise kann eine verbesserte Farbwiedergabe erfolgen, der Farbstich kann vermindert werden und/oder der Kontrast kann erhöht werden.

Mittels der Beleuchtung mit dem Durchlicht kann auch ein Vergleich des Vorderseitenregisters mit dem Rückseitenregister der Materialbahn durchgeführt werden.

Es ist bevorzugt, dass die Materialbahn zumindest bereichsweise transparent und/oder zumindest bereichsweise transzluszent für das Auflicht und/oder Durchlicht ist.

Die Materialbahn ist bevorzugt bereichsweise undurchlässig und/oder opak für das Auflicht und/oder Durchlicht.

Bei Materialbahnen, die sowohl transparent und/oder transluszent als auch undurchlässig und/oder opak sind, treten die Probleme der Bildung der Schatten und der Überbeleuchtung besonders stark auf, wodurch bei solchen Materialbahnen das Verfahren zum Betreiben der Inspektionsvorrichtung und/oder Bahnbeobachtungsvorrichtung besonders vorteilhaft ist.

Die Beleuchtung mittels des Auflichtsenders ist bevorzugt eine direkte Beleuchtung oder eine diffuse Beleuchtung. Die Beleuchtung mittels des Auflichtsenders ist bevorzugt eine linear polarisierte Beleuchtung. Die Beleuchtung mittels des Auflichtsenders ist bevorzugt eine fokussierte und/oder kollimierte Beleuchtung. Die Beleuchtung mittels des Auflichtsenders ist bevorzugt eine Hellfeldbeleuchtung und/oder eine Dunkelfeldbeleuchtung. Der Auflichtsender ist bevorzugt eingerichtet, monochrome Strahlung, polychrome Strahlung und/oder ein einstellbares Spektrum, insbesondere mittels einer RGB Beleuchtung einstellbar, zu emittieren. Der Auflichtsender weist bevorzugt Glühlampen, Gasentladungslampen, LEDs, insbesondere OLEDs und/oder AMOLEDs, und/oder Laser auf. Der Auflichtsender ist bevorzugt eingerichtet eine Zeilenbeleuchtung oder eine Flächenbeleuchtung durchzuführen. Der Auflichtsender ist bevorzugt modular und/oder an die Breite der Materialbahn anpassbar. Der Auflichtsender ist bevorzugt festestehend relativ zu der Materialbahn oder verschiebbar in Richtung der Materialbahnbreite. Der Auflichtsender ist bevorzugt derart angeordnet, dass ein Beleuchtungswinkel, mit dem die Strahlung auf die Materialbahn trifft, in Abhängigkeit des Materials der Materialbahn gewählt ist.

Die Lichtquelle ist bevorzugt eingerichtet, monochrome Strahlung, polychrome Strahlung und/oder ein einstellbares Spektrum, insbesondere mittels einer RGB Beleuchtung einstellbar, zu emittieren. Die Lichtquelle weist bevorzugt Glühlampen, Gasentladungslampen, LEDs, insbesondere OLEDs und/oder AMOLEDs, und/oder Laser auf.

Die Kamera ist bevorzugt eine Zeilenkamera oder eine Kamera mit einer zweidimensionalen Matrix an Photoelementen. Die Kamera ist bevorzugt eine Mehrkanalkamera mit mehreren Kanälen für unterschiedliche Wellenlängenbereiche. Die Kamera ist bevorzugt eine Schwarz-Weiß Kamera oder eine Farbkamera. Die Kamera ist bevorzugt eingerichtet eine Region of Interest zu nutzen. Die Kamera ist bevorzugt eine CCD Kamera oder eine CMOS Kamera. Die Inspektionsvorrichtung und/oder die Bahnbeobachtungsvorrichtung weist bevorzugt eine Mehrzahl an Kameras auf, dessen Fokusbereiche überlappend oder aneinandergrenzend angeordnet sind. Die Inspektionsvorrichtung und/oder die Bahnbeobachtungsvorrichtung weist bevorzugt eine zusätzliche Detailkamera auf, die eingerichtet ist einen Ausschnitt des Fokusbereichs mit einer höheren örtlichen Auflösung aufzunehmen. Die Kamera ist bevorzugt eingerichtet eindimensionale, zweidimensionale oder dreidimensionale Bilder aufzunehmen. Die Kamera hat bevorzugt ein Zoomobjektiv oder ein Fixfokus Objektiv. Die Kamera ist bevorzugt feststehend relativ zu der Materialbahn oder verschiebbar in Richtung der Materialbahnbreite.

Im Folgenden wird anhand der beigefügten schematischen Zeichnungen die Erfindung näher erläutert. Es zeigen:
Figur 1 eine Inspektionsvorrichtung und/oder Bahnbeobachtungsvorrichtung mit einer Materialbahn und mit einer Beleuchtung mit Durchlicht und
Figur 2 die Vorrichtung gemäß Figur 1 ohne Beleuchtung mit dem Durchlicht.

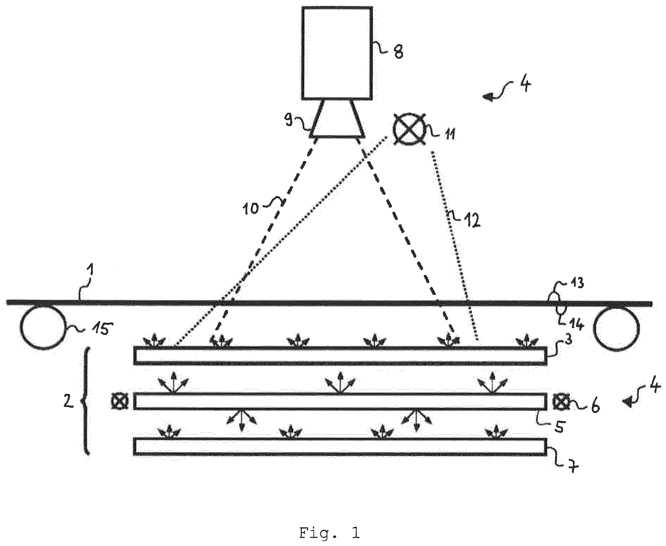

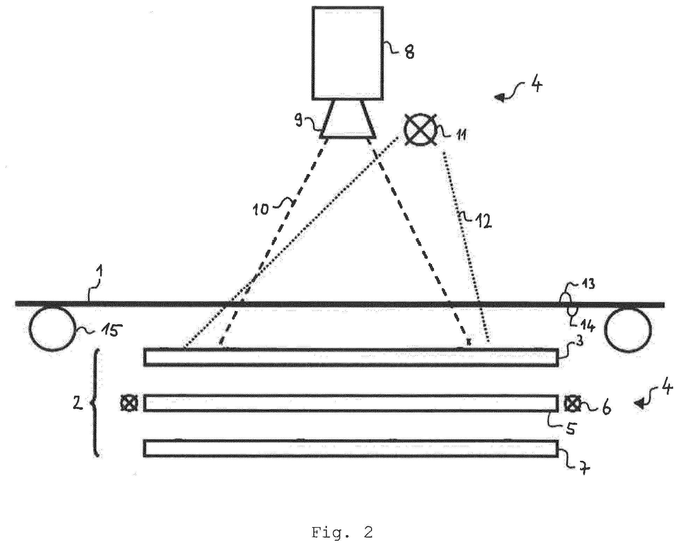

Figuren 1 und 2 zeigen eine Inspektionsvorrichtung und/oder Bahnbeobachtungsvorrichtung 4, die beispielsweise in einer Anlage zum Herstellen, Bearbeiten oder Veredeln einer Materialbahn 1 angeordnet sein kann. Die Inspektionsvorrichtung und/oder Bahnbeobachtungsvorrichtung 4 ist eingerichtet eine Inspektion bzw. Beobachtung der Materialbahn 1 durchzuführen. Die Materialbahn 1 weist eine Vorderseite 13 und eine Rückseite 14 auf, die der Vorderseite 13 abgewandt angeordnet ist. Die Materialbahn 1 ist mittels einer Führungsvorrichtung 15 geführt und bewegt sich im Betrieb der Anlage in einer Laufrichtung.

Die Materialbahn 1 ist zumindest bereichsweise transparent und/oder zumindest bereichsweise transluszent für das Auflicht und/oder das Durchlicht. Zudem ist die Materialbahn 1 bereichsweise undurchlässig und/oder opak für das Auflicht und/oder das Durchlicht.

Die Inspektionsvorrichtung und/oder Bahnbeobachtungsvorrichtung 4 weist eine Kamera 8, einen Auflichtsender 11 und eine Hintergrundblende 2 auf. Die Kamera 8 weist eine Abbildungsoptik 9 auf, die eingerichtet ist ein Sichtfeld 10 auf die Kamera 8 abzubilden. Zudem erzeugt die Abbildungsoptik 9 ein scharfes Bild der Vorderseite 13. Zumindest ein Teil der Materialbahn 1 ist durch das Sichtfeld 10 geführt, wobei die Vorderseite 13 der Materialbahn 1 der Kamera 8 zugewandt angeordnet ist. Die Kamera 8 ist eingerichtet ein Bild der im Sichtfeld 10 liegenden Vorderseite 13 der Materialbahn 1 aufzunehmen.

Der Auflichtsender 11 weist einen Beleuchtungsbereich 12 auf, der derjenige Raumbereich ist, der mittels des Auflichtsenders 11 mit einem Auflicht beleuchtbar ist. Der Beleuchtungsbereich 12 ist dabei derart angeordnet, dass die Vorderseite 13 der Materialbahn 1 in einem Bereich des Sichtfelds 10 mit dem Auflicht beleuchtbar ist. Gemäß Figuren 1 und 2 ist die gesamte in dem Sichtfeld 10 sich befindende Vorderseite 13 der Materialbahn 1 innerhalb des Beleuchtungsbereichs 12 angeordnet. Die Kamera 8 und der Auflichtsender 11 sind dabei derart angesteuert, dass die Aufnahme des Bildes und die Beleuchtung der Vorderseite 13 gleichzeitig erfolgen, so dass mit der Kamera 8 ein Bild der mit dem Auflicht beleuchteten Vorderseite 13 aufnehmbar ist.

Die Hintergrundblende 2 ist auf der der Kamera 8 gegenüberliegenden Seite der Materialbahn 1 und im Sichtfeld 10 der Kamera 8 angeordnet, so dass die Rückseite 14 der Materialbahn 1 der Hintergrundblende 2 zugewandt angeordnet ist. Gemäß Figuren 1 und 2 erstreckt sich die Hintergrundblende 2 über das gesamte Sichtfeld 10 der Kamera 8, wobei es ebenso denkbar ist, dass sich die Hintergrundblende 2 nur über einen Teil des Sichtfelds 10 der Kamera 8 erstreckt.

Die Hintergrundblende 2 weist eine Diffusorplatte 3, eine Lichtleiterplatte 5 und eine Reflektionsfläche 7, die diffus reflektierend sein kann, auf, die in dieser Reihenfolge ausgehend von der Materialbahn 1 angeordnet sind. Die Diffusorplatte 3 hat eine Absorption für das Auflicht von 5 bis 50 %, insbesondere von 10 bis 30 %. Dabei wird die Absorption bei senkrecht auf die Diffusorplatte einfallendes Licht bestimmt, d.h. in Figuren 1 und 2 sich vertikal ausbreitendes Licht. Die Diffusorplatte 3 kann beispielsweise eine Milchglasscheibe oder ein Acrylglas oder ein Plexiglas in Milchglasoptik, insbesondere aus PMMA, sein, die diffus reflektierende Reflektionsfläche 7 kann beispielsweise ein weiß lackiertes Blech oder eine Diffusorfolie sein. Die Lichtleiterplatte 5 kann beispielsweise Glas oder Polycarbonat aufweisen, wobei die Lichtleiterplatte zum Auskoppeln von Licht weiße Punkte oder Partikel aufweist oder strukturiert ist. Die Diffusorplatte 3, die Lichtleiterplatte 5 und die Reflektionsfläche 7 sind beabstandet zueinander angeordnet, so dass zwischen der Diffusorplatte 3 und der Lichtleiterplatte 5 sowie zwischen der Lichtleiterplatte 5 und der Reflektionsfläche 7 jeweils ein Luftspalt ausgebildet ist. Die Diffusorplatte 3, die Lichtleiterplatte 5 und die Reflektionsfläche 7 sind im Wesentlichen parallel zueinander und im Wesentlichen parallel zu der Materialbahn 1 angeordnet.

Die Hintergrundblende 2 weist eine Lichtquelle 6 auf, die eingerichtet ist Licht in ein Ende der Lichtleiterplatte 5 einzukoppeln, wobei die Lichtleiterplatte 5 eingerichtet ist, das von der Lichtquelle 6 eingekoppelte Licht an zwei gegenüberliegenden Seiten der Lichtleiterplatte 5 auszukoppeln. Dadurch ist die Rückseite 14 der Materialbahn 1 in einem Bereich des Sichtfeldes auch mit einem Durchlicht beleuchtbar. Dabei durchdringt das Durchlicht, welches an der der Materialbahn 1 zugewandten Seite der Lichtleiterplatte 5 aus dieser austritt, die Diffusorplatte 3 und trifft anschließend auf die Materialbahn 1. Durchlicht, welches an der der Materialbahn 1 abgewandten Seite der Lichtleiterplatte 5 aus dieser austritt, wird an der Reflektionsfläche 7 reflektiert, durchdringt die Lichtleiterplatte 5 und die Diffusorplatte 3 und trifft anschließend auf die Rückseite 14 der Materialbahn 1. Die Lichtquelle 6, die Kamera 8 und der Auflichtsender 11 sind dabei derart angesteuert, dass die Aufnahme des Bildes mit der Kamera 8 gleichzeitig mit der Beleuchtung mit dem Auflicht und dem Durchlicht erfolgen kann.

Es ist prinzipiell denkbar, dass die Vorderseite 13 mit dem Auflicht und die Rückseite 14 mit dem Durchlicht beleuchtet wird oder die Vorderseite 13 mit dem Auflicht und die Rückseite 14 nicht mit dem Durchlicht beleuchtet wird oder die Vorderseite 13 nicht mit dem Auflicht und die Rückseite 14 mit dem Durchlicht beleuchtet wird oder die Vorderseite 13 nicht mit dem Auflicht und die Rückseite 14 nicht mit dem Durchlicht beleuchtet wird.

Es ist denkbar, dass eine Mehrzahl der Lichtquellen 6 vorgesehen ist, die entlang des Endes der Lichtleiterplatte 5 angeordnet sind und einzeln einschaltbar sind, so dass die Rückseite 14 der Materialbahn 1 bereichsweise mit dem Durchlicht beleuchtbar ist. Alternativ ist denkbar, dass die Hintergrundblende 2 verschiebbar in Querrichtung der Materialbahn 1 angeordnet ist. In anderen Worten bedeutet dies, dass die Hintergrundblende 1 senkrecht zu der Laufrichtung der Materialbahn 1 und parallel verschiebbar zu der Materialbahn 1 ist. Bei der verschiebbaren Hintergrundblende kann eine Lichtquelle oder auch eine Mehrzahl von Lichtquellen vorgesehen sein.

Die Lichtquellen sind eingerichtet im ultravioletten und/oder im sichtbaren und/oder im infraroten Wellenlängenbereich zu emittieren, wobei prinzipiell alle Kombinationen von Wellenlängenbereichen denkbar sind, wobei im sichtbaren Bereich insbesondere eine RGB-Belichtung vorgesehen ist. Die Lichtquellen sind eingerichtet Dauerlicht und/oder geblitztes Licht zu emittieren. Die Lichtleiterplatte 5 ist transparent für senkrecht auf die Lichtleiterplatte 5 einfallendes Licht. Die Diffusorplatte 3 hat eine Absorption für das Auflicht von 5 bis 50 %, insbesondere von 10 bis 30 %.

Figur 1 zeigt den Fall, dass die mindestens eine Lichtquelle 6 eingeschaltet ist, und Figur 2 zeigt den Fall, dass die mindestens eine Lichtquelle 6 ausgeschaltet ist. Figur 1 stellt damit den aktiven Betrieb dar, in dem die Hintergrundblende 2 sowohl als Hintergrundblende 2 als auch als Durchlichtsender 2 fungiert. Figur 2 hingegen stellt den passiven Betrieb dar, bei dem die Hintergrundblende 2 nur als Hintergrundblende 2 fungiert.

Beispielhaft ist das Verfahren zum Betreiben der Inspektionsvorrichtung und/oder Bahnbeobachtungsvorrichtung 4 wie folgt durchzuführen: Sowohl in dem aktiven Betrieb als auch in dem passiven Betrieb der Hintergrundblende 2 wird die Vorderseite 13 der Materialbahn 1 mit dem Auflicht beleuchtet und zeitgleich mit der Kamera 8 ein Bild aufgenommen. Im passiven Betrieb der Hintergrundblende 2 ist die mindestens eine Lichtquelle 6 ausgeschaltet, wohingegen im aktiven Betrieb der Hintergrundblende 2 die Rückseite 14 der Materialbahn 1 zeitgleich mit der Vorderseite 13 der Materialbahn 1 mit dem Durchlicht beleuchtet wird.

### Bezugszeichenliste

1 Materialbahn
2 Hintergrundblende oder Durchlichtsender
3 Diffusorplatte
4 Inspektionsvorrichtung und/oder Bahnbeobachtungsvorrichtung
5 Lichtleiterplatte
6 Lichtquelle/Lichtquellen
7 Reflektionsfläche
8 Kamera
9 Abbildungsoptik
10 Sichtfeld
11 Auflichtsender
12 Beleuchtungsbereich
13 Vorderseite
14 Rückseite
15 Führungsvorrichtung

## Patentansprüche

1. Inspektionsvorrichtung und/oder Bahnbeobachtungsvorrichtung zur Inspektion bzw. Beobachtung von auf einer durch eine Führungsvorrichtung (15) geführten Materialbahn (1), die eine Vorderseite (13) und eine der Vorderseite (13) abgewandt angeordnete Rückseite (14) aufweist, mit einer Kamera (8), die ein Sichtfeld (10) aufweist und eingerichtet ist ein Bild der im Sichtfeld (10) liegenden Vorderseite (13) aufzunehmen, einem Auflichtsender (11), der eingerichtet ist die Vorderseite (13) in einem Bereich des Sichtfeldes (10) mit einem Auflicht zu beleuchten, und einer Hintergrundblende (2), die auf der der Kamera (8) gegenüberliegenden Seite der Materialbahn (1) und im Sichtfeld (10) der Kamera (8) angeordnet ist, wobei die Hintergrundblende (2) eine Diffusorplatte (3), die eine Absorption für das Auflicht von 5 bis 50 % hat, eine Lichtleiterplatte (5) und eine Reflektionsfläche (7) aufweist, die in dieser Reihenfolge ausgehend von der Materialbahn (1) angeordnet sind, und die Hintergrundblende (2) mindestens eine Lichtquelle (6) aufweist, die eingerichtet ist Licht in ein Ende der Lichtleiterplatte (5) einzukoppeln, wobei die Lichtleiterplatte (5) eingerichtet ist das Licht auszukoppeln, so dass die Rückseite (14) der Materialbahn (1) in einem Bereich des Sichtfeldes (10) auch mit einem Durchlicht beleuchtbar ist.

2. Inspektionsvorrichtung und/oder Bahnbeobachtungsvorrichtung gemäß Anspruch 1, wobei eine Mehrzahl der Lichtquellen (6) vorgesehen ist, die entlang des Endes der Lichtleiterplatte (5) angeordnet sind und einzeln einschaltbar sind, so dass die Rückseite (14) der Materialbahn (1) bereichsweise mit dem Durchlicht beleuchtbar ist.

3. Inspektionsvorrichtung und/oder Bahnbeobachtungsvorrichtung gemäß Anspruch 1, wobei die Hintergrundblende (2) verschiebbar in Querrichtung der Materialbahn (1) angeordnet ist.

4. Inspektionsvorrichtung und/oder Bahnbeobachtungsvorrichtung gemäß einem der Ansprüche 1 bis 3, wobei die Lichtquellen (6) eingerichtet sind im ultravioletten und/oder im sichtbaren und/oder im infraroten Wellenlängenbereich zu emittieren, wobei im sichtbaren Bereich insbesondere eine RGB-Belichtung vorgesehen ist.

5. Inspektionsvorrichtung und/oder Bahnbeobachtungsvorrichtung gemäß einem der Ansprüche 1 bis 4, wobei die Lichtquellen (6) eingerichtet sind Dauerlicht und/oder geblitztes Licht zu emittieren.

6. Inspektionsvorrichtung und/oder Bahnbeobachtungsvorrichtung gemäß einem der Ansprüche 1 bis 5, wobei die Diffusorplatte (3), die Lichtleiterplatte (5) und die Reflektionsfläche (7) beabstandet und im Wesentlichen parallel zueinander angeordnet sind.

7. Inspektionsvorrichtung und/oder Bahnbeobachtungsvorrichtung gemäß einem der Ansprüche 1 bis 6, wobei die Lichtleiterplatte (5) transparent für senkrecht auf die Lichtleiterplatte (5) einfallendes Licht ist.

8. Inspektionsvorrichtung und/oder Bahnbeobachtungsvorrichtung gemäß einem der Ansprüche 1 bis 7, wobei die Diffusorplatte (3) eine Absorption für das Auflicht von 10 bis 30 % hat.

9. Inspektionsvorrichtung und/oder Bahnbeobachtungsvorrichtung gemäß einem der Ansprüche 1 bis 8, wobei die Diffusorplatte (3) im Wesentlichen parallel zu der Materialbahn (1) angeordnet ist.

10. Verwendung einer Anordnung mit einer Diffusorplatte (3), einer Lichtleiterplatte (5), einer Lichtquelle (6) und einer Reflektionsfläche (7) als eine Hintergrundblende (2) oder als einen aktiven Durchlichtsender in einer Inspektionsvorrichtung und/oder Bahnbeobachtungsvorrichtung (4) gemäß einem der Ansprüche 1 bis 9, wobei die Diffusorplatte (3) eine Absorption für das Auflicht von 5 bis 50 %, insbesondere von 10 bis 30 %, hat.

11. Verwendung gemäß Anspruch 10, bei der die Vorderseite (13) mit dem Auflicht und die Rückseite (14) mit dem Durchlicht beleuchtet wird oder bei der die Vorderseite (13) mit dem Auflicht und die Rückseite (14) nicht mit dem Durchlicht beleuchtet wird oder bei der die Vorderseite (13) nicht mit dem Auflicht und die Rückseite (14) mit dem Durchlicht beleuchtet wird oder bei der die Vorderseite (13) nicht mit dem Auflicht und die Rückseite (14) nicht mit dem Durchlicht beleuchtet wird, insbesondere bei der die Vorderseite (13) mit dem Auflicht beleuchtet wird und optional die Rückseite (14) mit dem Durchlicht beleuchtet wird.

12. Verwendung gemäß Anspruch 10 oder 11, wobei die Materialbahn (1) zumindest bereichsweise transparent und/oder zumindest bereichsweise transluszent für das Auflicht und/oder Durchlicht ist.

13. Verwendung gemäß Anspruch 12, wobei die Materialbahn (1) bereichsweise undurchlässig und/oder opak für das Auflicht und/oder Durchlicht ist.

14. Verfahren zum Betreiben einer Inspektionsvorrichtung und/oder Bahnbeobachtungsvorrichtung (4) gemäß einem der Ansprüche 1 bis 9, bei dem mit der Kamera (8) ein Bild aufgenommen wird.

15. Verfahren gemäß Anspruch 14, bei dem zeitgleich mit dem Aufnehmen des Bildes die Vorderseite (13) mit dem Auflicht und die Rückseite (14) mit dem Durchlicht beleuchtet wird oder die Vorderseite (13) mit dem Auflicht und die Rückseite (14) nicht mit dem Durchlicht beleuchtet wird oder die Vorderseite (13) nicht mit dem Auflicht und die Rückseite (14) mit dem Durchlicht beleuchtet wird oder die Vorderseite (13) nicht mit dem Auflicht und die Rückseite (14) nicht mit dem Durchlicht beleuchtet wird.

16. Verfahren gemäß Anspruch 15, bei dem die Rückseite (14) zeitgleich mit der Vorderseite (13) beleuchtet wird.

17. Verfahren gemäß einem der Ansprüche 15 oder 16, bei dem die Materialbahn (1) zumindest bereichsweise transparent und/oder zumindest bereichsweise transzluszent für das Auflicht und/oder Durchlicht ist.

18. Verfahren gemäß Anspruch 17, wobei die Materialbahn (1) bereichsweise undurchlässig und/oder opak für das Auflicht und/oder Durchlicht ist.

## Claims

1. Inspection device and/or web observing device for inspecting or observing a material web (1) that is guided by a guiding device (15), the material web (1) having a front side (13) and a rear side (14) that is facing away from the front side (13), the inspection device and/or web observing device comprises a camera (8) comprising a field of view (10) and being adapted to record an image of the front side (13) that is within the field of view (10), an incident light transmitter (11) adapted to illuminate the front side (13) in an area of the field of view (10) with an incident light, and a background panel (2) that is arranged on the side of the material web (1) opposite to the camera (8) and within the field of view (10) of the camera (8), wherein the background panel (2) comprises a diffuser plate (3) that has an absorption for the incident light of 5 to 50%, a light guide plate (5) and a reflecting surface (7), wherein the diffuser plate (3), the light guide plate (5) and the reflecting surface (7) are arranged in this, sequence starting from the material web (1), wherein the background panel (2) comprises at least one light source (6) adapted to couple light into an end of the light guide plate (5), wherein the light guide plate (5) is adapted to couple out the light so that the rear side (14) of the material web (1) in an area of the field of view (10) can also be illuminated by a transmitted light.

2. Inspection device and/or web observing device according to claim 1, wherein a multitude of the light sources (6) are provided that are arranged along the end of the light guide plate (5) and can be switched on individually so that the rear side (14) of the material web (1) can be illuminated partially with the transmitted light.

3. Inspection device and/or web observing device according to claim 1, wherein the background panel (2) is arranged to be displaceable in a direction transverse to the material web (1).

4. Inspection device and/or web observing device according to any one of claims 1 to 3, wherein the light sources (6) are adapted to emit in the ultraviolet and/or in the visible and/or in the infrared wavelength range, wherein in the visible range in particular an RGB illumination is provided.

5. Inspection device and/or web observing device according to any one of claims 1 to 4, wherein the light sources (6) are adapted to emit continuous light and/or flashed light.

6. Inspection device and/or web observing device according to any one of claims 1 to 5, wherein the diffuser plate (3), the light guide plate (5) and the reflecting surface (7) are spaced apart from each another and are arranged substantially parallel to each other.

7. Inspection device and/or web observing device according to any one of claims 1 to 6, wherein the light guide plate (5) is transparent for light entering perpendicular to the light guide plate (5).

8. Inspection device and/or web observing device according to any one of claims 1 to 7, wherein the diffuser plate (3) has an absorption for the incident light of 10 to 30%.

9. Inspection device and/or web observing device according to any one of claims 1 to 8, wherein the diffuser plate (3) is arranged essentially parallel to the material web (1).

10. Use of an arrangement having a diffuser plate (3), a light guide plate (5), a light source (6) and a reflecting surface (7) as a background panel (2) or as an active transmitted light transmitter in an inspection device and/or web observing device (4) according to any one of claims 1 to 9, wherein the diffuser plate (3) has an absorption for the incident light of 5 to 50%, in particular of 10 to 30%.

11. Use according to claim 10, wherein the front side (13) is illuminated with the incident light and the rear side (14) is illuminated with the transmitted light, or wherein the front side (13) is illuminated with the incident light and the rear side (14) is not illuminated with the transmitted light, or wherein the front side (13) is not illuminated with the incident light and the rear side (14) is illuminated with the transmitted light, or wherein the front side (13) is not illuminated with the incident light and the rear side (14) is not illuminated with the transmitted light, in particular wherein the front side (13) is illuminated with the incident light and optionally the rear side (14) is illuminated with the transmitted light.

12. Use according to claim 10 or 11, wherein the material web (1) is at least in parts transparent and/or at least in parts translucent for the incident light and/or transmitted light.

13. Use according to claim 12, wherein the material web (1) is in parts impermeable and/or opaque for the incident light and/or transmitted light.

14. Method for operating an inspection device and/or web observing device (4) according to any one of claims 1 to 9, wherein an image is recorded by the camera (8).

15. Method according to claim 14, wherein simultaneously with the recording of the image, the front side (13) is illuminated with the incident light and the rear side (14) is illuminated with the transmitted light, or the front side (13) is illuminated with the incident light and the rear side (14) is not illuminated with the transmitted light, or the front side (13) is not illuminated with the incident light and the rear side (14) is illuminated with the transmitted light, or the front side (13) is not illuminated with the incident light and the rear side (14) is not illuminated with the transmitted light.

16. Method according to claim 15, wherein the rear side (14) is simultaneously illuminated with the front side (13).

17. Method according to any of claims 15 or 16, wherein the material web (1) is at least in parts transparent and/or at least in parts translucent for the incident light and/or transmitted light.

18. Method according to claim 17 wherein the material web (1) is in parts impermeable and/or opaque for the incident light and/or transmitted light.

## Revendications

1. Dispositif d'inspection et/ou dispositif d'observation de bande pour inspecter ou observer une bande de matière (1) guidée sur un dispositif de guidage (15), laquelle bande de matière présente une face avant (13) et une face arrière (14) agencée à l'opposé de la face avant (13), ayant une caméra (8) comportant un champ de vision (10) et conçue pour capturer une image de la face avant (13) située dans le champ de vision (10), un émetteur de lumière incidente (11) conçu pour éclairer la face avant (13) avec une lumière incidente dans une zone du champ de vision (10), et un panneau d'arrière-plan (2) qui est agencé sur la face de la bande de matière (1) opposée à la caméra (8) et dans le champ de vision (10) de la caméra (8), le panneau d'arrière-plan (2) comportant une plaque de diffusion (3) ayant une absorption de la lumière incidente de 5 à 50 %, une plaque de conduction de lumière (5) et une surface de réflexion (7) qui sont agencées dans cet ordre à partir de la bande de matière (1), et la plaque d'arrière-plan (2) comportant au moins une source de lumière (6) conçue pour coupler la lumière dans une extrémité de la plaque de conduction de lumière (5), la plaque de conduction de lumière (5) étant conçue pour désaccoupler la lumière de sorte que la face arrière (14) de la bande de matière (1) peut être également éclairée avec une lumière transmise dans une zone du champ de vision (10).

2. Dispositif d'inspection et/ou dispositif d'observation de bande selon la revendication 1, dans lequel est prévue une pluralité des sources de lumière (6) agencées le long de l'extrémité de la plaque de conduction de lumière (5) et aptes à être mises en fonctionnement individuellement de sorte que la face arrière (14) de la bande de matière (1) peut être éclairée dans certaines zones avec la lumière transmise.

3. Dispositif d'inspection et/ou dispositif d'observation de bande selon la revendication 1, dans lequel la plaque d'arrière-plan (2) est agencée de manière à pouvoir être déplacée dans une direction transversale de la bande de matière (1).

4. Dispositif d'inspection et/ou dispositif d'observation de bande selon l'une des revendications 1 à 3, dans lequel les sources de lumière (6) sont conçues de manière à émettre dans la gamme de longueurs d'onde ultraviolette et/ou visible et/ou infrarouge, une exposition lumineuse RVB étant en particulier prévue dans la gamme visible.

5. Dispositif d'inspection et/ou dispositif d'observation de bande selon l'une des revendications 1 à 4, dans lequel les sources de lumière (6) sont conçues pour émettre de la lumière continue et/ou de la lumière discontinue.

6. Dispositif d'inspection et/ou dispositif d'observation de bande selon l'une des revendications 1 à 5, dans lequel la plaque de diffusion (3), la plaque de conduction de lumière (5) et la surface de réflexion (7) sont agencées de manière espacée et sensiblement parallèle les unes aux autres.

7. Dispositif d'inspection et/ou dispositif d'observation de bande selon l'une des revendications 1 à 6, dans lequel la plaque de conduction de lumière (5) est transparente pour une lumière dirigée perpendiculairement à la plaque de conduction de lumière (5).

8. Dispositif d'inspection et/ou dispositif d'observation de bande selon l'une des revendications 1 à 7, dans lequel la plaque de diffusion (3) a une absorption de la lumière incidente de 10 à 30 %.

9. Dispositif d'inspection et/ou dispositif d'observation de bande selon l'une des revendications 1 à 8, dans lequel la plaque de diffusion (3) est agencée de manière sensiblement parallèle à la bande de matière (1).

10. Utilisation d'un agencement comportant une plaque de diffusion (3), une plaque de conduction de lumière (5), une source de lumière (6) et une surface de réflexion (7) comme plaque d'arrière-plan (2) ou comme émetteur de lumière transmise actif dans un dispositif d'inspection et/ou un dispositif d'observation de bande (4) selon l'une des revendications 1 à 9, dans laquelle la plaque de diffusion (3) a une absorption de la lumière incidente de 5 à 50 %, en particulier de 10 à 30 %.

11. Utilisation selon la revendication 10, dans laquelle la face avant (13) est éclairée avec la lumière incidente et la face arrière (14) est éclairée avec la lumière transmise, ou dans lequel la face avant (13) est éclairée avec la lumière incidente et la face arrière (14) n'est pas éclairée avec la lumière transmise, ou dans lequel la face avant (13) n'est pas éclairée avec la lumière incidente et la face arrière (14) est éclairée avec la lumière transmise, ou dans lequel la face avant (13) n'est pas éclairée avec la lumière incidente et la face arrière (14) n'est pas éclairée avec lumière transmise, en particulier dans lequel la face avant (13) est éclairée avec la lumière incidente et la face arrière (14) est facultativement éclairée avec la lumière transmise.

12. Utilisation selon la revendication 10 ou la revendication 11, dans laquelle la bande de matière (1) est transparente au moins dans certaines zones et/ou translucide au moins dans certaines zones à la lumière incidente et/ou à la lumière transmise.

13. Utilisation selon la revendication 12, dans laquelle la bande de matière (1) est imperméable dans certaines zones et/ou opaque à la lumière incidente et/ou à la lumière transmise.

14. Procédé pour faire fonctionner un dispositif d'inspection et/ou un dispositif d'observation de bande (4) selon l'une des revendications 1 à 9, dans lequel une image est capturée avec la caméra (8).

15. Procédé selon la revendication 14, dans lequel simultanément à la capture de l'image, la face avant (13) est éclairée avec la lumière incidente et la face arrière (14) est éclairée avec la lumière transmise, ou la face avant (13) est éclairée avec la lumière incidente et la face arrière (14) n'est pas éclairée avec la lumière transmise, ou la face avant (13) n'est pas éclairée avec la lumière incidente et la face arrière (14) est éclairée avec la lumière transmise, ou la face avant (13) n'est pas éclairée avec la lumière incidente et la face arrière (14) n'est pas éclairée avec la lumière transmise.

16. Procédé selon la revendication 15, dans lequel la face arrière (14) est éclairée simultanément à la face avant (13).

17. Procédé selon l'une des revendications 15 ou 16, dans lequel la bande de matière (1) est transparente au moins dans certaines zones et/ou translucide au moins dans certaines zones à la lumière incidente et/ou à la lumière transmise.

18. Procédé selon la revendication 17, dans lequel la bande de matière (1) est imperméable dans certaines zones et/ou opaque à la lumière incidente et/ou à la lumière transmise.
